# EUROPEAN PATENT APPLICATION

(11) **EP 0 877 193 A1**
(43) Date of publication of application: **11.11.1998**
(21) Application number: 98303664.1
(22) Date of filing: 11.05.1998
(51) Int. Cl.: F16L 55/12, F16L 57/00, F24C 3/00, F16B 19/10, F16L 55/11

(54) **A gas rail**

(30) Priority: 09.05.1997 GB 9709391
(71) Applicant: CREDA LIMITED, Stoke-on-Trent Staffordshire, ST11 9LJ (GB)
(72) Inventor: Stanford, Kevin George, Baddeley Green, Stoke on Trent ST2 7JD (GB)
(74) Representative: Waters, Jeffrey

(57) **Abstract**

The end of a gas rail must be sealed to prevent gas leakage, and conventionally this is done in one of two ways. The end of the rail may be flattened and brazed, or the end may have a cap brazed onto it. The invention provides a gas rail 2, one end 28 of which is sealed by a shell 29 which has been radially deformed to engage the inner surface of the gas rail by a plug 30 which remains in the shell after it has deformed it. A simply mechanical procedure is used to seal the rail, thereby eliminating the need for brazing.

## Description

This invention relates to a gas rail.

A gas rail typically is used in a hob to supply gas to a plurality of taps within the hob. It is necessary that the termination of the gas rail is sealed to prevent gas leakage. Conventionally, gas rails are sealed in one of two ways. The end of the rail may be flattened and then sealed by brazing. Alternatively, a cap can be brazed, or soldered, to the end of the rail.

The invention provides a gas rail, characterised in that one end is sealed by a shell which has been radially deformed to engage the inner surface of the gas rail by a plug which remains in the shell after it has deformed it.

The invention enables the rail to be sealed by a simple mechanical procedure, which eliminates the need for brazing or soldering.

The plug advantageously has a cylindrical cut, which defines a sleeve. When the shell is expanded by the plug, the sleeve splays outwardly to engage the shell. This feature prevents the plug becoming separated from the shell.

The gas rail constructed according to the invention lends itself to inclusion in a gas hob.

The invention will now be described, by way of example, with reference to the accompanying drawings, in which:-
Figure 1 is a schematic, partly-exploded perspective view, from above, of a base panel of a gas hob incorporating a gas rail constructed according to the invention;
Figure 2 is a schematic, partly-exploded perspective view, from the front, of the base panel of Figure 1;
Figure 3 is an axial section through the sealed portion of the gas rail of Figures 1 and 2; and
Figures 4a to 4c are sectional views illustrating a procedure of sealing the rail of Figures 1, 2 and 3.

Like reference numerals have been given to like parts throughout each of the Figures.

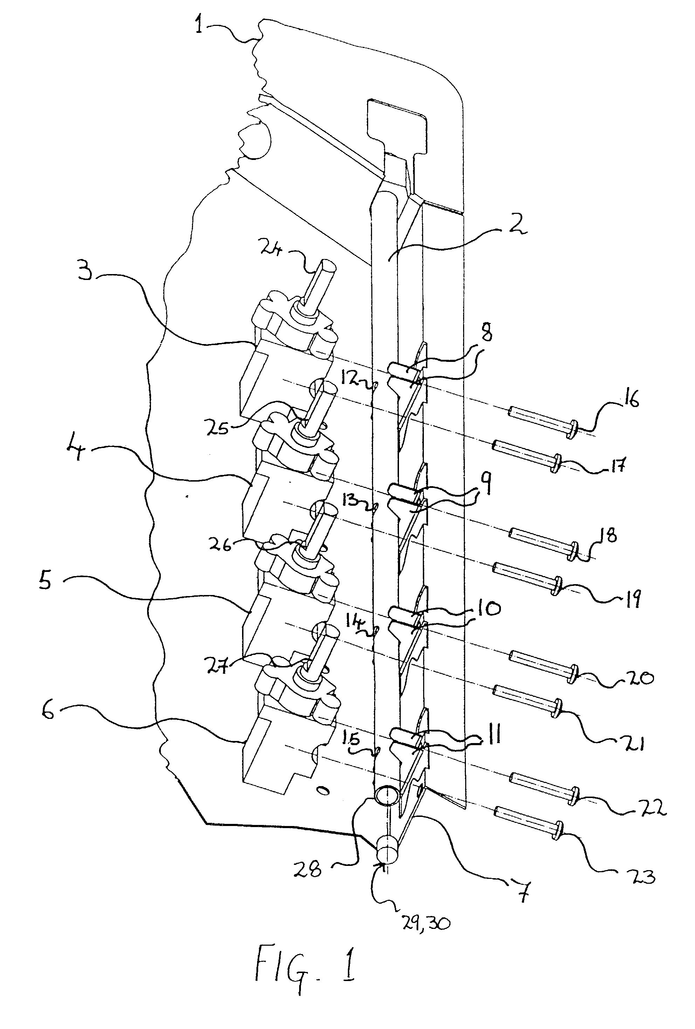

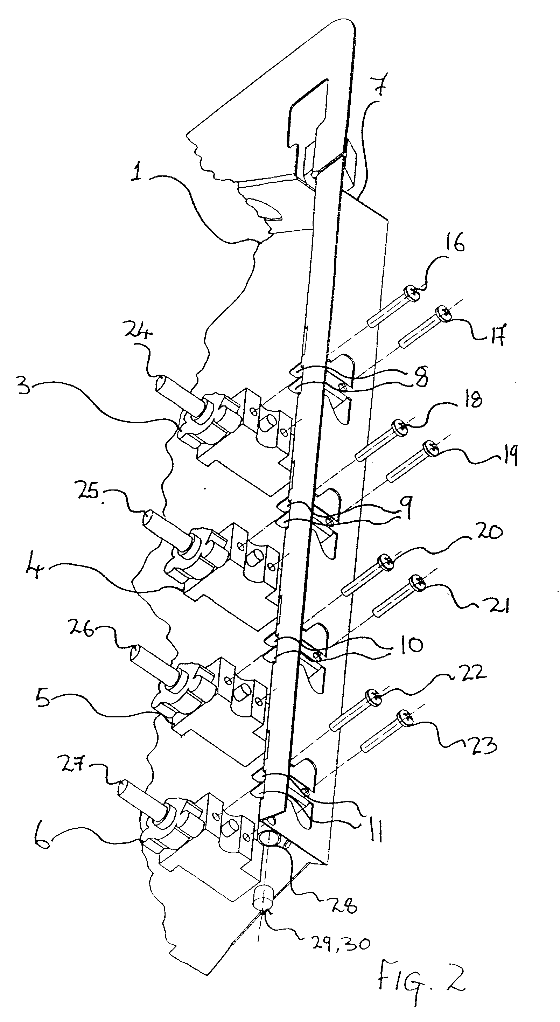

Referring to Figures 1 and 2, a base panel of a gas hob is shown and is indicated generally by the reference numeral 1. Gas is supplied by means of a gas rail 2 to gas taps 3 to 6, which are connectable to the gas burners of the hob (not shown).

The gas rail 2 is held against side-wall 7 of the base panel 1 by means of supports 8 to 11, which are formed from the side-wall. Each of the supports 8 to 11 comprises a pair of U-shaped flaps, which are cut out of side-wall 7, and which are pushed inwards, towards the gas rail 2. It is preferable that the flaps are substantially at right angles to the side-wall 7. The supports 8 to 11 locate the gas rail 2 and prevent it from being displaced in a direction parallel to side-wall 7.

The gas rail 2 has outlet holes 12 to 15 for supplying gas to taps 4 to 7 respectively. The rail 2 is arranged in the supports 8 to 11 such that the outlet holes face away from the side-wall 7. Each of the gas taps 3 to 6 has a short inlet tube, which is arranged to fit in an outlet hole. Gas taps 3 to 6 are fastened in their respective positions against outlet holes 12 to 15 respectively by means of screw fasteners 16 to 23, which are introduced through side-wall 7 of the base panel 1, and which extend through the side-wall into the taps. A pair of screws fixes each tap to the side-wall 7, one screw of each pair being introduced above the gas rail 2, the other screw below. The screws 16 to 23 are arranged to fit into threads cut into the gas taps 3 to 6, each pair of threads being arranged above and below the inlet of each tap.

By fixing the gas taps 3 to 6 to the side-wall 8 of the base panel 1 in this manner, the gas rail 2 is trapped between the taps and the side-wall. Rubber washers (not shown) are inserted between each gas tap and rail 2, in order to provide a seal to prevent gas leakage from the outlet holes 12 to 15.

When the taps 3 to 6 are fitted to the side-wall 7, the faces of the taps abut the faces of the U-shaped flaps which make up the supports 8 to 11. The effect of this is that the taps are automatically aligned, which facilitates the fitting of tap spindles 24 to 27 to other parts of the hob, for instance heat setting selectors.

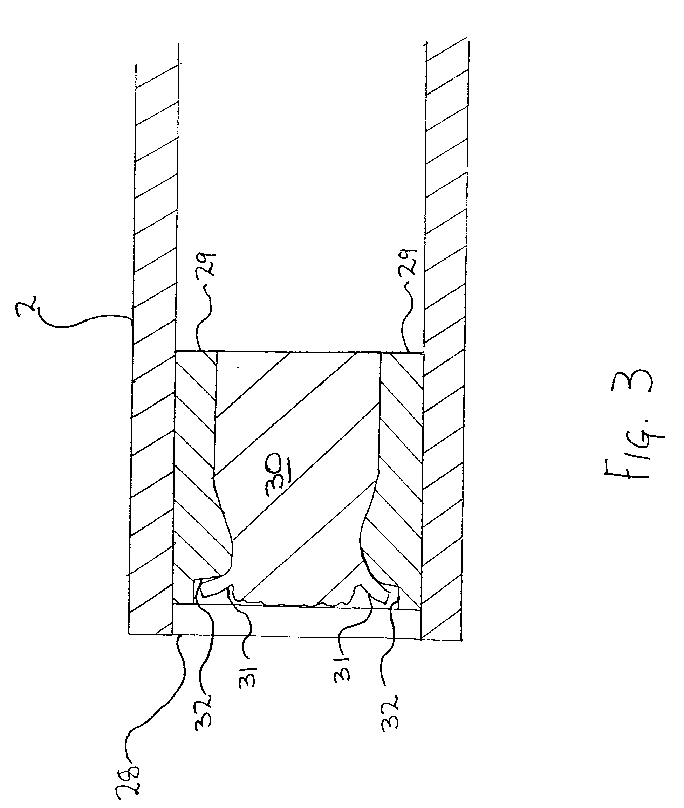

It is necessary that the end 28 of the gas rail is sealed, to prevent gas leakage, and Figure 3 shows the rail 2 when sealed.

Referring to Figure 3, the end 28 of the gas rail 2 is sealed by combination of a shell 29 and a plug 30. The shell 29 and plug 30 may be realised by any one of the blind rivets disclosed in Patent No. GB 1538872, the contents of which are incorporated herein by reference.

The shell 29 has been radially deformed by the plug 30 to engage the inner surface of the gas rail 2, and thus form a gas tight seal. The plug 30 has an outwardly-splaying sleeve 31 which engages in a shoulder 32 in the shell 29, and thereby prevents the plug becoming separated from the shell.

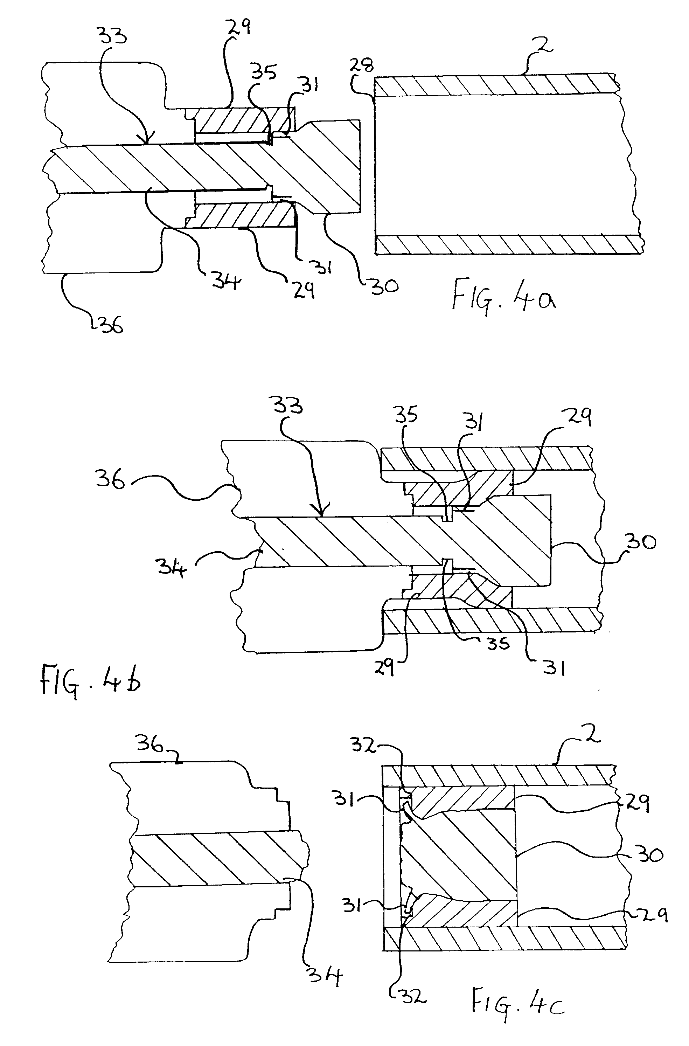

The procedure of positioning shell 29 and plug 30 in the end 28 of the rail 2 is shown in Figures 4a, b and c.

Referring to Figure 4a, a mandrel 33 is shown, which mandrel comprises plug 30 and a stem 34. At the junction of plug 30 and stem 34 is a breaker groove 35, which is arranged such that the plug breaks off from the stem when the groove experiences a predetermined tensile force. The plug 30 also has a cylindrical cut, concentric with the stem, which defines the sleeve 31.

The shell 29 is threaded onto the stem 34, and the whole assembly is inserted in the nose of a tool 36. A suitable tool is described in the specification of the aforementioned patent. The tool 36 is then used to insert plug 30. stem 34 and shell 29 in the end 28 of the rail 2 until the whole length of the shell is within the rail, as shown in Figure 4b.

In this drawing, the tool 36 has been actuated, and is pulling the mandrel 33 further into the body of the tool. When the tapered section of plug 30 encounters the inner surface of the shell 29, it deforms it and urges the shell to expand radially into engagement with the inner surface of the gas rail 2.

As the mandrel 33 is pulled further into the tool 36, the enlarged section of plug 30 encounters the inner surface of the shell 29. The outer surface of shell 29 is in engagement with the rail 2, and therefore resists further expansion. Consequently, the plug 30 begins to wire-draw.

Continued pulling of the mandrel 33 causes the plug 30 to abut the nosetip of the tool 36, which splays sleeve 31 into engagement with the shell 29. Pulling beyond this point subjects the breaker groove 35 to a greater force than experienced hitherto. As a result, the stem 34 and plug 30 disengage from each other at the breaker groove 35.

Figure 4c shows the separated stem 34 and plug 30. The gas rail 2 is now sealed by the shell 29 and plug 30, these components being locked together by the sleeve 31 of the plug being in engagement with the shoulder 32 of the shell.

A suitable material for the plug 30 is carbon steel and the shell 29 may be an alloy of aluminium, although other materials may be used.

The invention has been described as a component of a gas hob. However, the invention is equally as applicable to other gas appliances.

Further variations may be made without departing from the scope of the invention, and these will be apparent to those skilled in the art.

## Claims

1. A gas rail, characterised in that one end is sealed by a shell (29) which has been radially deformed to engage the inner surface of the gas rail (2) by a plug (30) which remains in the shell after it has deformed it.

2. A gas rail as claimed in claim 1, in which the plug (30) has a cylindrical cut to define a sleeve (31) which splays outwardly to engage the shell (29) when the shell is expanded by the plug.

3. A gas hob including a gas rail as claimed in claim 1 or 2.

4. A gas appliance including a gas rail as claimed in claim 1 or 2.
